# EUROPEAN PATENT APPLICATION

(11) **EP 0 879 743 A2**
(43) Date of publication of application: **25.11.1998**
(21) Application number: 98304047.8
(22) Date of filing: 21.05.1998
(51) Int. Cl.: B60R 25/06

(54) **Vehicle anti-theft system**

(30) Priority: 24.05.1997 GB 9710686
(71) Applicant: EATON CORPORATION, Cleveland, Ohio 44114-2584 (US)
(72) Inventor: Wright, Keith, Preston, Lancashire PR1 8TQ (GB)
(74) Representative: Clarke, Geoffrey Howard

(57) **Abstract**

A vehicle anti-theft system is described which operates to disable the transmission and so prevent the vehicle being moved under its own power. A driver operated enable/disable unit provides a go/no-go input to a transmission controller. The controller acts to prevent engagement of gears in the absence of the appropriate input signal. Different levels of disabling can be provided.

## Description

This invention relates to the vehicle anti-theft system, in particular a transmission disabling system.

It is related to copending EP application EP-A-0681951 and US application serial number 08/424976, filed 19 April 1995.

The theft of vehicles is an increasing problem. It is a particular problem if the vehicle is valuable or is a goods vehicle which may carrying a valuable cargo. It is therefore desirable to find simple and swift ways to either prevent theft or if it has occurred to limit the range of a stolen or hijacked vehicle. Many systems have been proposed which relate to the security of the vehicle preventing access to the vehicle. There are many systems relating to steering column locks and other security means to try and reduce the vulnerability of the vehicle. Known security systems operate to prevent use of the steering system or the engine by acting on the Engine Control Unit. These locks or inhibitors may be of a key or key pad type, swipe or other electronic card systems.

However, it is desirable also to prevent the use of the vehicle transmission, which can provide an effective vehicle means of immobilising the vehicle. One such method is disclosed in EP-A-0681951.

It is possible that if the security system is connected to a remotely operable surveillance or tracking system, the vehicle could be disabled remotely if so instructed by an appropriate controller. For example, it is known to track the location of vehicles by use of Satellite tracking systems, and for the vehicles to transmit on-board diagnostic information back to a base station. If the vehicle was provided with a means of transmitting information to indicate that it had been hijacked, or if from a tracking information obtained from a satellite system it was determined the vehicle had gone off its normal or anticipated route, it would be possible to transmit a signal to the vehicle to initiate either an active or a passive anti-theft measure. The system is suitable for applications where the control and arming and dis-arming system could be operated remotely.

According to the present invention there is provided a vehicle anti-theft system for operation on a vehicle having an engine, a disengagable clutch, a change gear transmission system, having a non-manual gearchange operating means, control means controlling the gear changes on the transmission, the antitheft system characterised by the control means having means for receiving input signals indicating if operation of the transmission system is permitted or not, and if such operation is not permitted then disabling the transmission by not allowing the engagement of any gears.

The invention will now be described with reference to the accompanying drawings in which:
Figure 1 shows a general layout of a vehicle powertrain and transmission system;
Figure 2 shows a basic anti-theft operation system;
Figure 3 shows a variation of the system of Figure 1 but in which manoeuvring is permitted;
Figure 4 shows a time out anti-theft operation in which after a specific period of time the transmission is disabled;
Figure 5 shows a passive "bring to rest" anti-theft system in which the vehicle is passively brought to rest and;
Figure 6 shows an active "bring to rest" system in which the engine is defuelled, the transmission downshifted progressively until the vehicle is brought to rest.

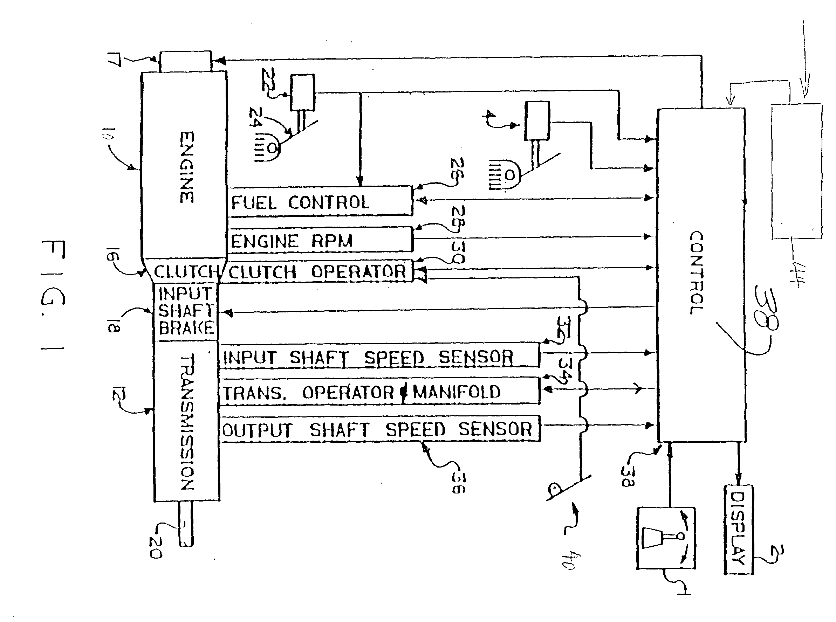

Figure 1 shows a general layout of a transmission system. The engine 10 may be any form of prime mover. Currently petrol and diesel fuelled engines are the most popular. The engine 10 is connected to a transmission 12 through a disengagable clutch 16. The transmission may optionally be provided with an input shaft brake 18. The transmission may be a simple transmission with a plurality of selectable ratios or it may be a compound transmission having one or more of a range unit or splitter unit, of the type widely used in commercial vehicles.

The engine power is controlled in response to demands sensed through a throttle pedal 24 and throttle pedal transducer 22. This is fed to a fuel controller 26, which also supplies information to an ECU 38.

The transmission 10 is provided with an input shaft speed sensor 32, an output shaft speed sensor 36 and a means of selecting the chosen ration 34 called a transmission operator and manifold. The speed sensors 32, 36 supply information to the ECU as does the transmission operator manifold 34 which also receives operator instructions from the manifold. The transmission operator manifold 34 is considered to be the assembly which operates the transmission to ensure the appropriate gears are selected. It may be an X-Y shifter operated by pneumatic, hydraulic or electric means.

Transmission ratio selection is by means of a driver selectable transmission input selector 1 and information display 2 provides information of the ratio selected. Information from a brake pedal operation transducer 4 may optionally be supplied to the ECU 38. The transmission input selector 1 is in the form of any known transmission selector and is used to select a gear ratio or neutral. The selector may be of a detented type with a number of positions selectable or a biased switch means. The display is preferably mounted in a position where it can be easily seen by the driver. It can be programmed to show whether the gear engaged or the range of gears is selected.

A clutch pedal 40 may be provided which operates the clutch 16 in known manner by use of foot control. Alternatively, if the clutch is controlled by the ECU, the clutch pedal may not be present. An enable/disable unit 44 is also present and supplies an input to the ECU. The enable/disable unit can be any form of lock and key system, keypad, card reader or the like. An output signal is then passed from the enable/disable unit to the ECU. The signal to the ECU can be either in a positive form to indicate the transmission should operate, or in a negative form to disable it in the absence of the correct enabling input.

The basic antitheft operation can be arranged to be any one of the range of options explained below depending upon which is considered to be most suitable.

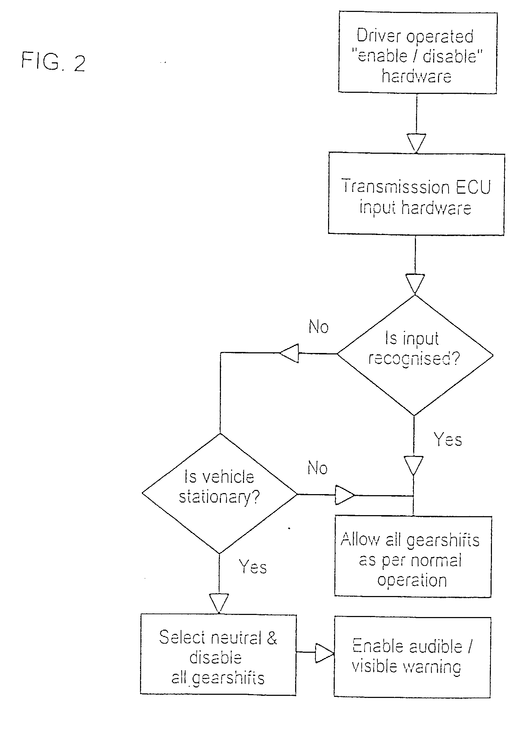

Fig. 2 shows a simple form of the anti-theft transmission disable system. An input is received from the enable/disable unit 44, said input passing to the ECU 38. The ECU then conducts a series of checks set out in Figure 2 to determine whether the input from the enable/disable unit 44 is recognised and correct. If the correct signal is present, the full range of operation of the transmission is permitted. If the appropriate signal is not present, then a logic test is carried out to determine whether a vehicle is stationary or not. This can easily be done by determining if there is an output signal value from the output shaft speed sensor 36. If the vehicle is stationary then the transmission is disabled by selection of neutral and the disabling of all gear shifts. The vehicle can thus not be moved under its own power once the transmission has been disabled.

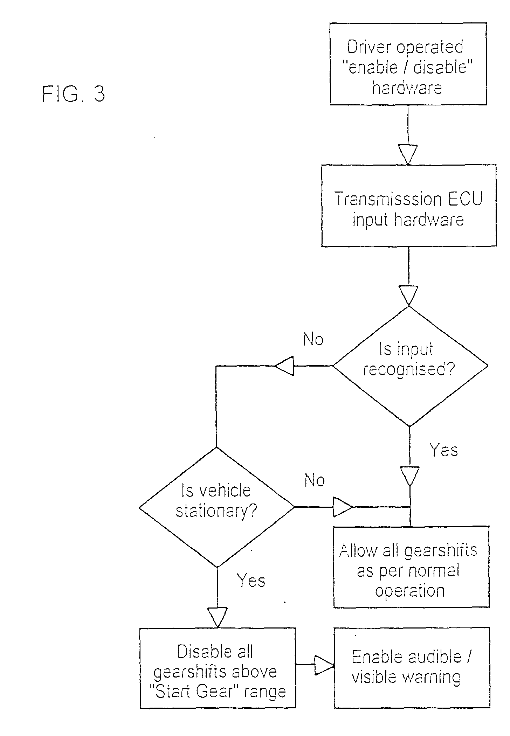

It has been considered that a total disabling of the transmission system would be an inconvenience in a number of circumstances and therefore a manoeuvring option could be built into the ECU. Figure 3 shows one such option. The early part of the disabling test is the same as that described for Figure 2. The final stages differ in that instead of disabling the transmission completely a limited range of gears could be permitted. This could be limited to reverse and a start gear. In the case of a car or light van that would be first gear. In the case of a heavy truck it could be anything up to 5th gear. Speed in these lower gears would be limited to a low level but be sufficient to enable the vehicle to be manoeuvred around a yard or garage area.

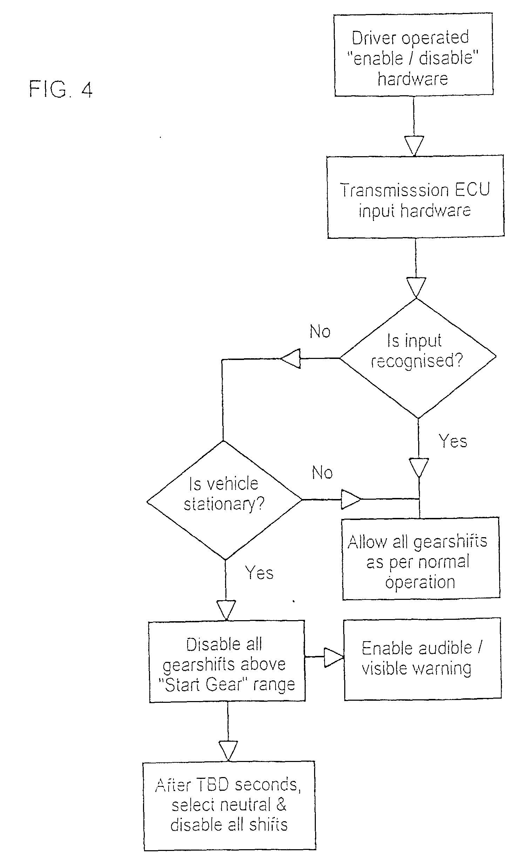

An alternative to the manoeuvring operation described is shown in Figure 4. This allows full operation of the transmission for a limited period of time followed by a timed disabling of the transmission. Such manoeuvring could be permitted for say 3 or 5 minutes, which is adequate for most purposes. A useful option is to provide either or both of a visual warning and audible warning that the transmission will be disabled in a predetermined time. This will give the driver a warning so that he can avoid leaving the vehicle in an unsafe condition or dangerous position.

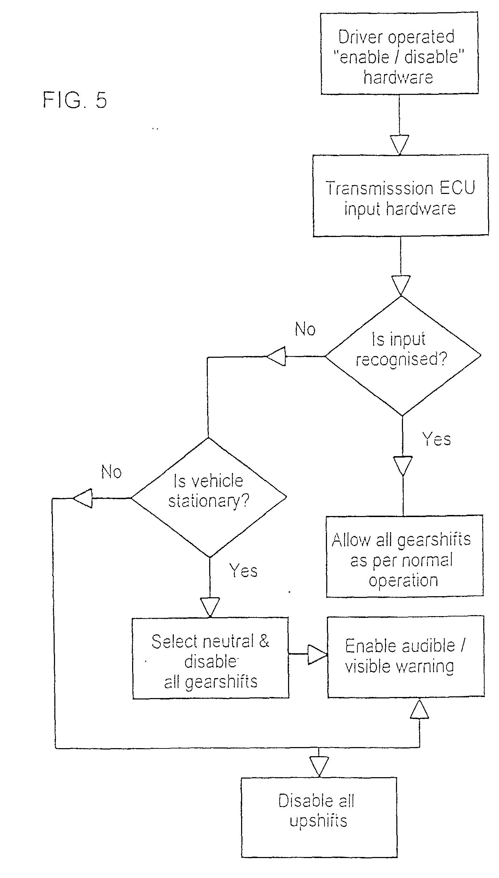

Figure 5 shows a further example of a method of employing the invention. In this example the presence or absence of the enable/disable signal is detected as described above. However, the operation of the disable function is controlled in a different way. If the vehicle is stationary then the transmission can be disabled as described. However, if it is moving, the system operates to prevent the operation of any upshift even if it is selected. The effect is that the vehicle is slowed gradually and safely by preventing the driver from making any upshifts. A particular advantage of this mode of operation is that the vehicle could be stopped in response to an input from outside the vehicle itself. For example, if the vehicle were linked to a satellite tracking system, the ECU control and monitoring system could be configured to receive an input to disable the transmission. If such a signal were received whilst the vehicle was moving at high speed then disabling the transmission suddenly could be dangerous. Thus the disabling by prevention of upshifts could be used to bring the vehicle to rest relatively safely. This would be particularly useful if it was known the vehicle had been hijacked or was being forcibly diverted.

In some environments it may be considered just to disable all upshifts is not sufficient of as a means of restricting progress of the vehicle.

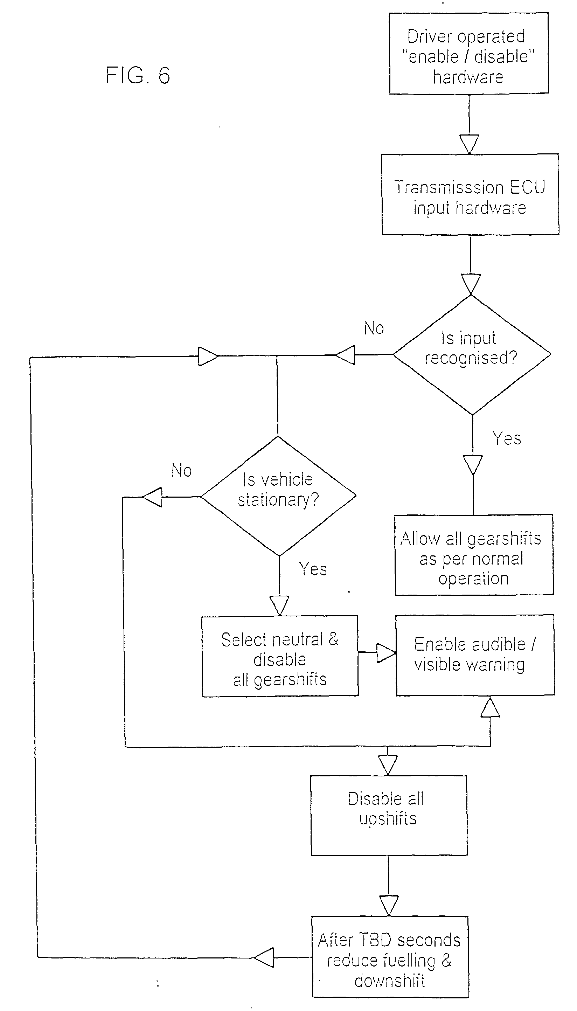

Figure 6 therefore shows an additional option in which the vehicle is brought to a halt by progressive downshifting. In order to ensure the engine is not damaged by overspeeding the ECU will supply an instruction to the fuel controller to reduce engine fuelling to bring the engine speed down to a level at which a downshift is possible without engine overspeed in the next lowest ratio. The downshift can then be made and once completed the fuelling reduced again to reduce engine speed so that the procedure may be repeated. In this way the vehicle can be slowed gradually without use of the brakes and interference in such important and sensitive systems.

## Claims

1. A vehicle anti-theft system for operation on a vehicle having an engine (10), a disengagable clutch (16), a change gear transmission system (12), having a non-manual gearchange operating means, control means (ECU) controlling the gear changes on the transmission (12), the antitheft system characterised by the control means having means for receiving input signals indicating if operation of the transmission system is permitted or not, and if such operation is not permitted then disabling the transmission by not allowing the engagement of any gears.

2. A system according to claim 1 in which an enable/disable unit (44) is provided to supply an input signal to a transmission system controller.

3. A system according to either of claim 1 or 2 in which a transmission output shaft speed sensor provides a signal for use in a transmission disabling routine.

4. A method of disabling a vehicle, the vehicle having an engine (10), a change gear transmission (12), the transmission having an electronic control unit (ECU), the electronic control unit capable of accepting an enable/disable signal from an enable/disable unit (44), the method including the steps of determining if operation of the transmission is permitted or not by the presence or absence of one or more of a transmission enable/disable signal and either permitting operation of the transmission or disabling the transmission in response to the presence or absence of an enabling or disabling signal as the case may be.

5. A method according to claim 4 in which the disabling routine includes a determination of whether a gear is engaged, and if a gear is engaged selecting neutral and prohibition of engagement of any other gear ratios.

6. A method according to claims 4 or 5 in which the disabling routine includes the disabling of all gear shifts for ratios above a start gear range.

7. A method according to claim 4 in which the transmission disabling routine prevents all upshift gears changes.

8. A method according to claim 4 in which the transmission disabling routine is characterised in that after a predetermined period the ECU selects neutral and prevents all gearshifts in order to disable the transmission.

9. A method according to claim 4 in which the transmission disabling routine is characterised in that after a predetermined time the ECU initiates a progressive downshifting of the transmission until a lowest gear is reached.

10. A method according to claim 9 in which after a second time period, the ECU ensures the transmission is shifted to neutral and no further gear shifts are permitted.
